# EUROPÄISCHE PATENTSCHRIFT

(11) **EP 2 117 821 B1**
(45) Veröffentlichungstag und Bekanntmachung des Hinweises auf die Patenterteilung: **20.10.2010**
(21) Anmeldenummer: 08700302.6
(22) Anmeldetag: 04.02.2008
(51) Int. Cl.: B31B 19/14, B31B 23/00, B29C 59/00

(54) **VERFAHREN ZUM HERSTELLEN VON BAHNABSCHNITTEN AUS FLEXIBLEM BAHNMATERIAL SOWIE ZUM HERSTELLEN VON VERPACKUNGSBEHÄLTERN**
METHOD FOR THE PRODUCTION OF WEB SECTIONS FROM FLEXIBLE WEB MATERIAL, AND FOR THE PRODUCTION OF PACKAGING CONTAINERS
PROCÉDÉ POUR PRODUIRE DES TRONÇONS DE BANDE À PARTIR D'UN MATÉRIAU FLEXIBLE EN BANDE ET PROCÉDÉ POUR PRODUIRE DES RÉCIPIENTS D'EMBALLAGE

(30) Priorität: 05.02.2007 AT 1882007
(43) Veröffentlichungstag der Anmeldung: 18.11.2009
(73) Patentinhaber: STARLINGER & CO. GESELLSCHAFT MBH, 1060 Wien (AT)
(72) Erfinder: SKOPEK, Peter, 3400 Klosterneuburg (AT); FÜRST, Herbert, 2564 Weissenbach/Triesting (AT)
(74) Vertreter: Margotti, Herwig Franz
(86) Internationale Anmeldenummer: PCT/AT2008/000036
(87) Internationale Veröffentlichungsnummer: WO 2008/095212

(56) Entgegenhaltungen:
- EP-A- 0 398 447
- DE-A1- 2 439 953
- GB-A- 2 246 092
- JP-A- 10 296 879
- US-A- 2 855 832
- US-A- 4 274 896
- US-A- 6 080 093
- US-A1- 2003 040 411

## Beschreibung

Die Erfindung betrifft ein Verfahren zum Herstellen von Bahnabschnitten aus einem flexiblen Bahnmaterial, wobei das Bahnmaterial im Abstand der Länge der zu formenden Bahnabschnitte mit Abrisslinien versehen wird, die das Bahnmaterial schwächen, aber keine vollständige Trennung der Bahnabschnitte vom Bahnmaterial herbeiführen und die Bahnabschnitte entlang der Abrisslinien durch Abreißen vom Bahnmaterial getrennt werden.

Die Erfindung betrifft weiters ein Verfahren zum Herstellen von Verpackungsbehältern unter Verwendung von erfindungsgemäß hergestellten Bahnabschnitten, wobei ein wichtiger Aspekt der Erfindung die Herstellung von Seitenfaltenbehältern, insbesondere Seitenfaltensäcken, betrifft.

Die Herstellung von Seitenfaltenverpackungen aus Papier ist seit vielen Jahrzehnten bekannt. In der Praxis werden solche Verpackungen nach folgendem Verfahren hergestellt:
- Eine flache Papierbahn wird mit geraden oder gestuften Perforationslinien im Abstand der späteren Abschnittslänge versehen.
- Die flache Bahn wird zu einem Schlauch geformt und längs verklebt.
- Anschließend werden die Schlauchabschnitte durch Abreißen entlang der Perforationslinien getrennt.
- Ein Endbereich des abgerissenen Schlauchabschnitts wird zu einem Boden geformt und verklebt.

Die Konstruktion einer "pinch bottom-Verpackung" ist z.B. aus der US 4008850 bekannt, wobei in diesem Dokument auch vorgeschlagen wird, kunststoffbeschichtetes Papier für das Bahnmaterial zu verwenden und Kunststoffbeschichtungsflächen zu verkleben.

Eine Vorrichtung zur Herstellung von mehrlagigen Papiersäcken, die Schlauchabschnitte mit gestaffelter Anordnung der einzelnen Papierlagen umfassen, ist aus dem Dokument EP 664208 bekannt. Um unterschiedliche Formate der Papiersäcke herstellen zu können, weisen die dafür verwendeten "Schlauchmaschinen" eine Veränderbarkeit der die Schlauchabschnittlängen bestimmenden Abstände der Querperforationen in den einzelnen Papierlagen auf. Auch die Abstände der quer verlaufenden Querklebestreifen sind entsprechend anpassbar. Die bekannte Vorrichtung zum Herstellen eines mehrlagigen Schlauches aus in gleichen Abständen mit Querperforationen versehenen Papierbahnen, von dem zur Sackherstellung Schlauchabschnitte abgerissen werden, umfasst in einem Maschinengestell gelagerte, an einer rotierenden Welle befestigte Perforiermesser, die die Papierbahnen mit Querperforationen versehen, wobei der radiale Abstand der Perforiermesser zu der Welle zur Formateinstellung veränderbar ist. Weiters sind im Maschinengestell mit Querklebeleisten versehene und mit Klebsttiffauftragseinrichtungen zusammenwirkende Querklebezylinder gelagert. Mit einer Längskleberolle werden die einander überlappenden Ränder der Papierbahnen, bevor sie durch Leitrollen zu Schläuchen umgeschlagen werden, mit einem Klebstoffauftrag versehen. An der rotierenden Welle sind in gleichen Winkelabständen vier Träger für wahlweise an diesen befestigbare Perforiermesser angeordnet, die Einrichtungen zur Verstellung ihres radialen Abstandes von der Welle besitzen.

Die Anbringung der Perforationslinien an Papiersäcken ist wenig problematisch, da Papier leicht zu schneiden ist. Im Gegensatz dazu stellt jedoch bei der Herstellung von Seitenfaltenverpackungen aus Kunststoffgeweben oder ihren Verbunden die Anbringung der Perforation eine große Herausforderung dar, da bei Kunststoffgeweben mit ihren übereinander liegenden Bändchen das Schneiden problematisch ist. Es sind bisher z.B. teure Stanzwerkzeuge erforderlich, die wenig flexibel sind und verschleißen. Von dieser Problematik sind Gewebe aus verstreckten Kunststoffbändchen auch dann betroffen, wenn sie mit zumindest einer zusätzlichen Materialschicht verbunden sind, wobei es sich um eine Beschichtung der Kunststoffbändchen oder des Gewebes oder um Verbunde des Gewebes mit anderen Materialien handelt. Gewebe und ihre Verbunde werden häufig als schlauchförmige Bahnen hergestellt. Es wäre auch wünschenswert ein Verfahren zu finden, mit dem eine versetzte Perforation direkt an diesen schlauchförmigen Bahnen angebracht werden kann. Ein Verfahren zum Herstellen von Bahnabschnitten aus einem flexiblen Bahnmaterial, wobei Abrisslinien mittels Laserstrahlbearbeitung erzeugt werden ist aus dem Dokument GB-A-2246092 bekannt.

Die vorliegende Erfindung löst die genannten Probleme des Standes der Technik durch ein Verfahren zum Herstellen von Bahnabschnitten aus einem flexiblen Bahnmaterial, das ein Gewebe aus verstreckten Kunststoffbändchen ist, mit den Merkmalen des Anspruchs 1. Mit einem Laserstrahl ist man in der Lage ein Gewebe aus Kunststoffbändchen zu schneiden, zu perforieren oder mit einer definierten Eindringtiefe zu ritzen, obwohl aufgrund der zumindest teilweisen Übereinander-Anordnung der Bändchen in dem Gewebe die Dicke des Bahnmaterials variiert. Ein weiterer Vorteil ist, dass Laser sehr wartungsarm und nahezu verschleißfrei sind. Vorzugsweise ist das Gewebe aus ein- oder mehrschichtigen Kunststoffbändchen aus PP, PE, oder PET hergestellt, wobei die Kunststoffbändchen vor dem Weben zumeist verstreckt werden, um ihre Festigkeit zu vervielfachen.

Durch das erfindungsgemäße Verfahren ist es - im Gegensatz zum Stand der Technik - möglich, die Abrisslinien als Perforationslinien oder Schwächungslinien oder eine Kombination aus Perforations- und Schwächungslinien auszubilden, wodurch eine hervorragende Anpassung der Abreißbarkeit an die zu verarbeitenden Bahnmaterialien geschaffen wird.

Das Dokument DE 4122273 A1 offenbart ein Verfahren für Laserschneiden für kontinuierlich bewegte Streifen eines Bahn- oder Flachmaterials. Dabei werden mittels Laser durchgehende oder perforierte Transversal(teil)schnitte im Bahn- oder Flachmaterial erzeugt. Das Anbringen von Schwächungslinien ist nicht offenbart. Es ist auch nicht offenbart, dass die Bahnabschnitte durch Abreißen vom Bahnmaterial getrennt werden. Weiters enthält das Dokument keine Materialangabe bezüglich des Bahn- oder Flachmaterials. Aus der Zeichnung geht nur hervor, dass das Bahnmaterial einlagig ist.

Die Erfindung ist hervorragend für Bahnmaterialien anwendbar, die ein Gewebe aus Kunststoffbändchen umfassen, das mit zumindest einer zusätzlichen Materialschicht verbunden ist, denn die Schneidleistung des Lasers lässt sich sehr gut an die unterschiedlichsten Materialkombinationen anpassen.

In einer Ausführungsform eines Gewebes aus Kunststoffbändchen, das mit zumindest einer zusätzlichen Materialschicht versehen ist, ist die zusätzliche Materialschicht eine Kunststoffschicht, wie z.B. eine OPP-Folie, die mit dem Gewebe verbunden ist. In einer weiteren Ausführungsform ist die zusätzliche Materialschicht eine Beschichtung aus Kunststoffmaterial, die auf die Kunststoffbändchen des Gewebes aufgebracht ist. In wiederum einer anderen Ausführungsform ist das Bahnmaterial ein Verbundmaterial aus einem, optional beschichteten, Gewebe aus Kunststoffbändchen und zumindest einer weiteren Verbundkomponente, ausgewählt aus Kunststofffolie, Metallfolie, metallisierter Kunststofffolie, Vliesstoff (nonwoven), speziellen Haftschichten und/oder Papier. Bevorzugte Materialien umfassen ein- oder mehrschichtige Kunststoffbändchen aus PP, PE, oder PET, wobei die aus diesen Kunststoffbändchen hergestellten Geweben mit ein- oder mehrschichtiger Beschichtung aus PP, PE, oder speziellen Haftschichten versehen sein können. Die außen liegenden Einzelschichten eines solchen Verbundes können auch mit einem außen liegenden Druck oder Konterdruck versehen sein.

Ein besonderer Vorteil der Erfindung liegt darin, dass sie auch für schlauchförmiges Bahnmaterial anwendbar ist. Um die Möglichkeit zu haben die beiden aufeinander liegenden Lagen des Schlauches an verschiedenen Stellen zu perforieren und so eine gestaffelte Perforation direkt an einem Schlauch anzubringen, ist vorgesehen, das Bahnmaterial von beiden einander gegenüberliegenden Außenflächen einer Laserstrahlbearbeitung zu unterziehen.

Selbstverständlich ist die Erfindung auch für flaches Bahnmaterial anwendbar.

In einer bevorzugten Ausgestaltung der Erfindung wird der Laserstrahl durch eine Scannereinheit entlang der vorgegebenen Abrisslinie geführt, wobei bei schlauchförmigem Bahnmaterial Laserquellen und Scannereinheiten an der Oberseite und an der Unterseite der Schlauchbahn angeordnet sein können. Durch die Ablenkung des Laserstrahls mit einem Scanner wird das Abfahren von nahezu beliebigen Konturen der Abrisslinie ermöglicht, während das Bahnmaterial unter dem Laser bewegt wird, wobei die Kontur softwaregesteuert sehr einfach an die Abmessungen der Verpackung angepasst werden kann.

Um verschiedene Eindringtiefen oder Durchdringtiefen des Laserstrahls im Bahnmaterial zu realisieren ist in einer Ausführungsform der Erfindung vorgesehen, dass während des Führens des Laserstrahls entlang der vorgegebenen Abrisslinie die Laserenergie (genauer gesagt: die Energiedichte im Auftreffpunkt auf dem Bahnmaterial) gemäß den vorgesehenen Eindringtiefen in das Bahnmaterial verändert wird.

Die Erfindung ermöglicht das Herstellen der Abrisslinie während das Bahnmaterial kontinuierlich bewegt wird, indem der Laserstrahl so nachgeführt wird, dass die Längsbewegung des Bahnmaterials ausgeglichen wird, wobei optional die Laserenergie an den jeweiligen Abstand zwischen Laserquelle und Auftreffpunkt auf dem Bahnmaterial angepasst wird, um am Auftreffpunkt immer die gewünschte Laserenergie zur Verfügung zu stellen. Es ist möglich die Energiedichte im Auftreffpunkt bei sich aufweitendem Strahl konstant zu halten, indem die Laserleistung dem Abstand zwischen Laserquelle und Bahnmaterial angepasst wird.

Um die Eindringtiefe des Laserstrahls in das Bahnmaterial zu steuern, kann weiters vorgesehen werden, dass die Leistung der Laserquelle in Abhängigkeit von der Relativgeschwindigkeit des Laserstrahls in Bezug auf das Bahnmaterial geregelt wird, oder dass die Relativgeschwindigkeit des Laserstrahls in Bezug auf das Bahnmaterial geregelt wird. Dadurch wird die vom Laserstrahl in das Bahnmaterial eingebrachte Energie pro Längeneinheit der Abrisslinie festgelegt.

Mit der Erfindung lassen sich weiters beliebige Bahnabschnitte herstellen, die einen gestuften Bahnendabschnitt erfordern, da durch den Laserstrahl problemlos gestufte Abrisslinien erzeugt werden können.

Das erfindungsgemäße Verfahren zum Herstellen von Bahnabschnitten aus einem flexiblen Bahnmaterial eignet sich ausgezeichnet für den Einsatz bei einem Verfahren zum Herstellen von Verpackungsbehältern, insbesondere Seitenfaltenverpackungen, wobei nach dem Herstellen der Abrisslinie im Bahnmaterial mittels Laser die Bahnabschnitte vom Bahnmaterial abgerissen werden. Zur Erzeugung eines Bodens bzw. einer Deckfläche wird zumindest ein Endbereichs des Bahnabschnitts auf den Bahnabschnittskörper umgefaltet und der umgefaltete Endbereich am Bahnabschnittskörper durch Verkleben oder Verschweißen befestigt. Das Umfalten kann einmal oder mehrmals vorgenommen werden.

Bei Verwendung eines flachen Bahnmaterials werden die Bahnabschnitte vor dem Abreißen der Länge nach zu einem Schlauch geformt, so dass sich die Längsränder überlappen, die anschließend miteinander verbunden, insbesondere verklebt oder verschweißt werden, um eine Längsnaht zu erzeugen.

Zur Herstellung von Seitenfaltenverpackungen, insbesondere Seitenfaltensäcken wird, vorzugsweise vor dem Abreißen der Bahnabschnitte vom Bahnmaterial, zumindest eine Längsfalte in den Bahnabschnitten ausgebildet.

Die Erfindung wird nun anhand von Ausführungsbeispielen unter Bezugnahme auf die Zeichnungen in nicht einschränkender Weise näher erläutert. In den Zeichnungen zeigen
Fig. 1 eine perspektivische Ansicht eines schlauchförmigen Bahnmaterials, in dem gemäß der Erfindung Abrisslinien angebracht werden;
Fig. 2 eine Draufsicht auf das erfindungsgemäß behandelte schlauchförmige Bahnmaterial;
Fig. 3 eine Draufsicht auf ein flaches Bahnmaterial, in dem gemäß der Erfindung Abrisslinien angebracht sind;
Figuren 4 bis 6 perspektivische Ansichten von in einem Bahnmaterial gemäß der Erfindung hergestellten Abrisslinien;
Fig. 7 die Anwendung des in Fig. 6 dargestellten Ritzens plus Perforierens für eine flache Bahn aus einem Verbund aus Kunststoffbändchengewebe und Folie;
Fig. 8 die Anwendung des in Fig. 4 dargestellten Perforierens für eine schlauchförmige Bahn aus einem Verbund aus Kunststoffbändchengewebe und Folie.

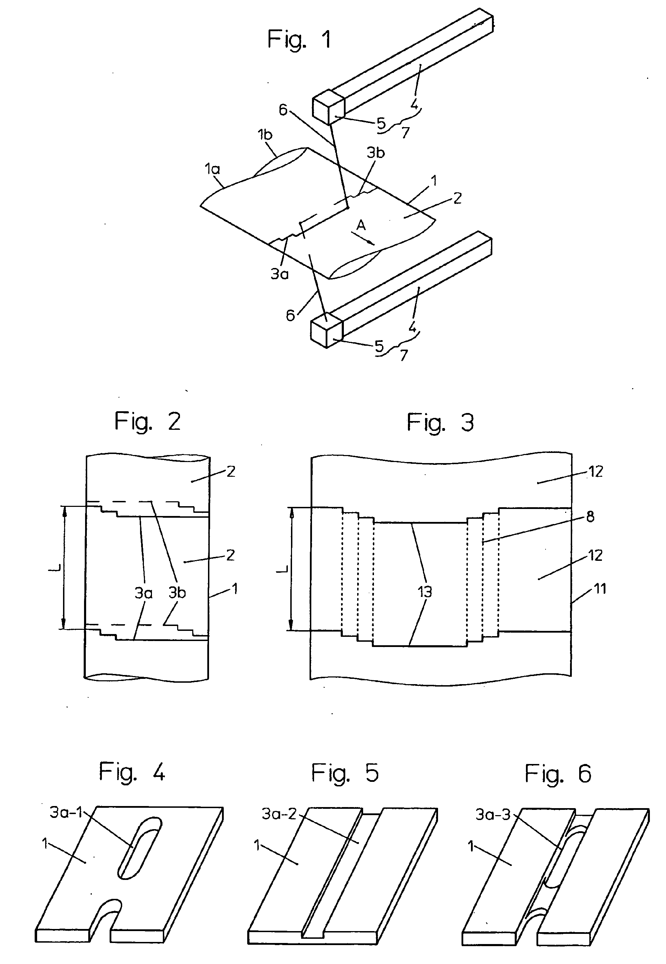

Das erfindungsgemäße Verfahren zum Herstellen von Bahnabschnitten 2 aus einem flexiblen Bahnmaterial 1 wird nun zunächst unter Bezugnahme auf Fig. 1 erläutert. Das flexible Bahnmaterial wird durch herkömmliche Beförderungsmittel, z.B. nicht dargestellte Walzenpaare in Längsrichtung (Pfeil A) zu einer Perforierstation zugeführt. Das Bahnmaterial 1 ist in diesem Ausführungsbeispiel schlauchförmig, wobei es flach zusammengelegt ist, so dass eine obere (1a) und eine untere (1b) Materialbahn übereinander liegen. Das Bahnmaterial 1 umfasst ein Gewebe aus Kunststoffbändchen, die bevorzugt aus PP, PE, oder PET bestehen und zweckmäßig vor dem Weben verstreckt wurden. Die Kunststoffbändchen können ein- oder mehrschichtig ausgebildet sein. Das Gewebe kann mit zumindest einer zusätzlichen Materialschicht verbunden sein. In einer Variante ist die zusätzliche Materialschicht eine ein- oder mehrschichtige Kunststoffschicht, insbesondere aus PP, PE oder eine OPP-Folie, oder umfasst spezielle Haftschichten. In einer weiteren Variante ist die zusätzliche Materialschicht eine ein- oder mehrschichtige Beschichtung aus Kunststoffmaterial, die auf die Kunststoffbändchen des Gewebes aufgebracht ist. In wiederum einer anderen Variante ist das Bahnmaterial ein Verbundmaterial aus einem, optional beschichteten, Gewebe aus Kunststoffbändchen und zumindest einer weiteren Verbundkomponente, ausgewählt aus Kunststofffolie, Metallfolie, metallisierter Kunststofffolie, Vliesstoff (nonwoven), speziellen Haftschichten und/oder Papier. Die außen liegenden Einzelschichten können auch mit einem außen liegenden Druck oder Konterdruck versehen sein.

Die Perforierstation, der das Bahnmaterial 1 - zugeführt wird, umfasst zwei Laserschneideinheiten 7, jeweils mit einer Laserquelle 4 zur Erzeugung eines Laserstrahls 6 und einem Scanner 5 zur Ablenkung des Laserstrahls 6. Eine erste Laserschneideinheit 7 ist über dem schlauchförmigen Bahnmaterial 1 angeordnet, wobei ihr Laserstrahl auf die Außenfläche der oberen Materialbahn 1a gerichtet wird. Die zweite Laserschneideinheit 7 ist unter dem schlauchförmigen Bahnmaterial 1 angeordnet, wobei ihr Laserstrahl auf die Außenfläche der unteren Materialbahn 1b gerichtet wird. Die beiden Laserschneideinheiten 7 haben die Aufgabe, das Bahnmaterial 1 im Abstand der Länge L (siehe Fig. 2) von zu formenden Bahnabschnitten 2 mit Abrisslinien 3a, 3b zu versehen, die das Bahnmaterial 1 zwar schwächen, aber keine vollständige Trennung der Bahnabschnitte 2 vom Bahnmaterial 1 herbeiführen. Die im Bahnmaterial 1 erzeugten Abrisslinien 3a, 3b und Bahnabschnitte 2 sind in Fig. 2 in Draufsicht dargestellt.

Die beiden Laserschneideinheiten 7 arbeiten unabhängig voneinander, wobei die Energie des jeweiligen Laserstrahls 6 so eingestellt ist, dass er nur in der ihm zugeordneten Materialbahn 1a oder 1b eine Abrisslinie 3a, 3b einschneidet, die andere Materialbahn 1b oder 1a aber nicht beschädigt. Die Abrisslinien werden vom Laserstrahl 6 als Perforationslinien 3a-1 (siehe Fig. 4) oder Schwächungslinien 3a-2 (siehe Fig. 5) oder als eine Kombination aus Perforations- und Schwächungslinien 3a-3 (siehe Fig. 6) ausgebildet.

Nach der Ausbildung der Abrisslinien 3a, 3b können die Bahnabschnitte 2 in bekannter Weise vom Bahnmaterial 1 abgerissen und weiter verarbeitet werden.

Die Abrisslinien 3a, 3b können unterschiedlichste Konturen aufweisen, insbesondere mehrfach gestuft sein. Der Laserstrahl 6 wird durch den Scanner 5 entlang der mittels Software vorgegebenen Kontur der Abrisslinie geführt, wobei diese Kontur einfach veränderbar ist und das erfindungsgemäße Verfahren somit große Variabilität aufweist. Insbesondere ist es durch die Erfindung auch möglich, die Energie des Laserstrahls zu steuern und zu verändern, während er entlang der vorgegebenen Abrisslinie geführt wird, um z.B. eine Kombination aus Perforations- und Schwächungslinien zu erzeugen, oder um die Energie des Laserstrahls trotz veränderlichem Abstand zwischen Laserquelle 4 und Auftreffpunkt des Laserstrahls 6 auf der Materialbahn 1a, 1b konstant zu halten. Es ist durch die Steuerung der Laserenergie auch möglich, Materialbahnen mit wechselnden Materialeigenschaften (Dicke, Zusammensetzung des Verbunds, etc.) zu perforieren.

Ein zusätzlicher Vorteil der Erfindung ist, dass das Bahnmaterial 1 kontinuierlich entlang der Richtung A weiterbewegt werden kann, während die Abrisslinien 3a, 3b durch den Laserstrahl 6 geschnitten werden. Dabei wird der Laserstrahl 6 der Bewegung des Bahnmaterials so nachgeführt, dass die Längsbewegung (A) des Bahnmaterials 1 ausgeglichen wird. Optional kann die Laserenergie an den jeweiligen Abstand zwischen Laserquelle 6 und Auftreffpunkt des Laserstrahls 6 auf dem Bahnmaterial 1 angepasst werden.

Die eingebrachte Energie pro Längeneinheit und damit die Eindringtiefe wird durch die Leistung der Laserquelle 4 und die Relativgeschwindigkeit des Laserstrahls 6 in Bezug auf das Bahnmaterial 1 festgelegt. Außer dem schlauchförmigen Bahnmaterial 1 können mittels dem erfindungsgemäßen Laserschneiden auch in einem flachen Bahnmaterial 11 Abrisslinien 13 ausgebildet werden, um Bahnabschnitte 12 zu erzeugen, wie in Fig. 3 in Draufsicht dargestellt ist. Bei flachem Bahnmaterial 11 wird nur eine Laserschneideinheit 7 benötigt. Es sei darauf hingewiesen, dass in Abhängigkeit von der Kontur der Abrisslinien 3a, 3b eventuell auch bei schlauchförmigem Bahnmaterial 1 mit einer Laserschneideeinheit 7 das Auslangen gefunden wird.

Mithilfe des erfindungsgemäßen Verfahrens zum Herstellen von Bahnabschnitten 2, 12 aus einem flexiblen Bahnmaterial 1, 11 durch Laserschneiden ist es möglich Verpackungsbehälter herzustellen, indem zunächst die Bahnabschnitte 2, 12 durch Erzeugen der Abrisslinien 3a, 3b, 13 hergestellt werden, und anschließend die Bahnabschnitte 2, 12 vom Bahnmaterial 1, 11 abgerissen werden, danach zumindest ein Endbereich des Bahnabschnitts 2, 12 einmal oder mehrmals auf sich selbst bzw. den Bahnabschnittskörper umgefaltet wird und der umgefaltete Endbereich am Bahnabschnittskörper durch Verkleben oder Verschweißen befestigt wird. Sofern ein flaches Bahnmaterial 11 verwendet wird, werden die Bahnabschnitte 12 vor dem Abreißen der Länge nach zu einem Schlauch mit überlappenden Längsrändern geformt, die miteinander verbunden, insbesondere verklebt oder verschweißt werden.

Weiters kann im hergestellten Materialschlauch, vorzugsweise vor dem Abreißen der Bahnabschnitte 2, 12 vom Bahnmaterial 1, 11, zumindest eine Längsfalte 8 in den Bahnabschnitten 2, 12 ausgebildet werden. Somit lassen sich Seitenfaltenverpackungen, insbesondere Seitenfaltensäcke herstellen.

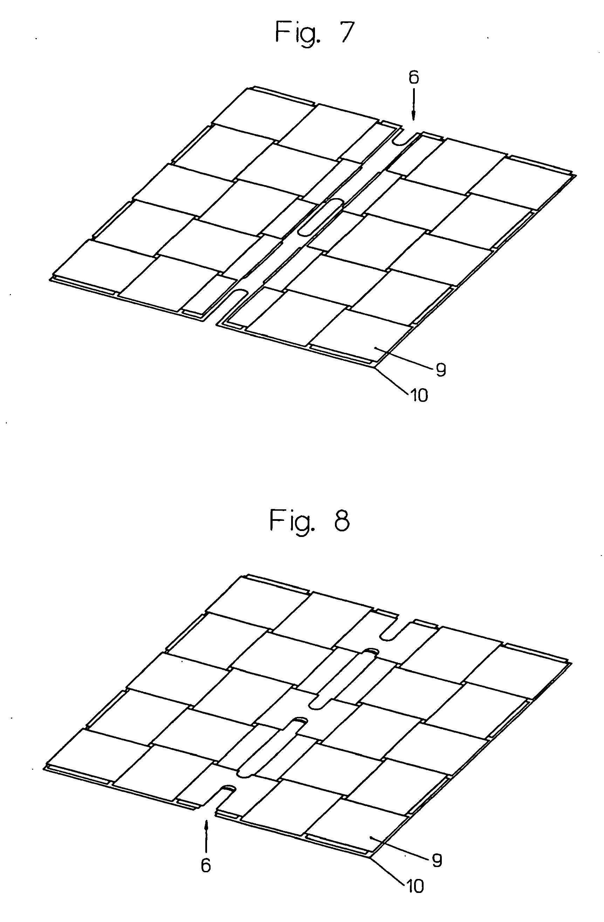

Fig. 7 zeigt die Anwendung der in Fig. 6 beschriebenen Methode (Schwächung plus perforierte Abschnitte) für eine flache Bahn, die aus einem Verbund aus Kunststoffbändchengewebe 9 und einer Folie 10, z.B. Kunststofffolie, insbesondere OPP-Folie, oder Metallfolie oder metallisierte Kunststofffolie, besteht. Dabei trifft der Laserstrahl auf der Gewebeseite (die später die Innenseite der Verpackung bildet) auf, durchtrennt das Gewebe 9 größtenteils, perforiert aber die verbleibende Folie 10 nur an wenigen Stellen (vorzugsweise an den Stellen, die längs zur Bahnrichtung verlaufen). Dadurch kann erreicht werden, dass sich die Bahn später an den Perforationslinien sauber abreißen lässt.

Fig. 8 zeigt die Anwendung des in Fig. 4 dargestellten Perforierens für eine schlauchförmige Bahn aus einem Verbund aus Kunststoffbändchengewebe 9 und Folie 10. Dabei trifft der Laserstrahl auf der Folienseite (später die Außenseite einer daraus hergestellten Verpackung) auf und durchtrennt die Bahn abschnittsweise vollständige. Die verbleibenden Stege müssen schmal sein und werden eventuell auch, wie in Fig. 6 gezeigt, geschwächt (geritzt), damit sich die Schlauchabschnitte später sauber trennen lassen. Stellen, die längs zur Bahnrichtung verlaufen, müssen in jedem Fall vollständig durchtrennt werden und dürfen keine Stege aufweisen.

## Patentansprüche

1. Verfahren zum Herstellen von Bahnabschnitten (2, 12) aus einem flexiblen Bahnmaterial (1, 11), wobei das Bahnmaterial im Abstand der Länge (L) der zu formenden Bahnabschnitte mit Abrisslinien (3a, 3b; 13) versehen wird, die das Bahnmaterial schwächen, aber keine vollständige Trennung der Bahnabschnitte vom Bahnmaterial herbeiführen und die Bahnabschnitte entlang der Abrisslinien durch Abreißen vom Bahnmaterial getrennt werden wobei die Abrisslinien (3a, 3b; 13) mittels Laserstrahlbearbeitung erzeugt werden **dadurch gekennzeichnet, dass** das Bahnmaterial (1, 11) ein Gewebe aus verstreckten Kunststoffbändchen ist und dass, der Laserstrahl (6) durch eine Scannereinheit (5) entlang der vorgegebenen Kontur der Abrisslinie (3a, 3b; 13) geführt wird und während des Führens des Laserstrahls (6) entlang der vorgegebenen Kontur der Abrisslinie die Laserenergie des Laserstrahls (6) gemäß den vorgesehenen Eindringtiefen in das Bahnmaterial (1, 11) verändert wird.

2. Verfahren nach Anspruch 1, **dadurch gekennzeichnet, dass** der Laserstrahl (6) entlang der vorgegebenen Kontur der Abrisslinie (3a, 3b; 13) geführt wird, während das Bahnmaterial (1, 11) in Längsrichtung (A) bewegt wird, wobei der Laserstrahl so nachgeführt wird, dass die Längsbewegung des Bahnmaterials ausgeglichen wird, wobei optional die Laserenergie an den jeweiligen Abstand zwischen Laserquelle und Auftreffpunkt auf dem Bahnmaterial angepasst wird.

3. Verfahren nach Anspruch 1 oder 2, **dadurch gekennzeichnet, dass** die Leistung der Laserquelle (4) in Abhängigkeit von der Relativgeschwindigkeit des Laserstrahls (6) in Bezug auf das Bahnmaterial geregelt wird, oder dass zur Erzielung einer gewünschten Eindringtiefe die Relativgeschwindigkeit des Laserstrahls (6) in Bezug auf das Bahnmaterial geregelt wird.

4. Verfahren nach einem der vorhergehenden Ansprüche, **dadurch gekennzeichnet, dass** das Gewebe aus verstreckten Kunststoffbändchen mit zumindest einer zusätzlichen Materialschicht verbunden ist.

5. Verfahren nach Anspruch 4, **dadurch gekennzeichnet, dass** die zusätzliche Materialschicht eine Kunststoffschicht, insbesondere eine OPP-Folie ist, die mit dem Gewebe verbunden ist.

6. Verfahren nach Anspruch 4, **dadurch gekennzeichnet, dass** die zusätzliche Materialschicht eine Beschichtung aus Kunststoffmaterial ist, die auf die Kunststoffbändchen des Gewebes aufgebracht ist:

7. Verfahren nach einem der Ansprüche 4 bis 6, **dadurch gekennzeichnet, dass** das Bahnmaterial (1, 11) ein Verbundmaterial aus einem, optional beschichteten, Gewebe aus Kunststoffbändchen und zumindest einer weiteren Verbundkomponente, ausgewählt aus Kunststofffolie, Metallfolie, metallisierter Kunststofffolie, Vliesstoff (nonwoven), speziellen Haftschichten und/oder Papier ist.

8. Verfahren nach einem der vorhergehenden Ansprüche, **dadurch gekennzeichnet, dass** die Abrisslinien (3a, 3b; 13) als Perforationslinien (3a-1) oder Schwächungslinien (3a-2) oder eine Kombination (3a-3) aus Perforations- und Schwächungslinien ausgebildet werden.

9. Verfahren nach einem der vorhergehenden Ansprüche, **dadurch gekennzeichnet, dass** die Abrisslinie (3a, 3b; 13) eine gestufte Linie ist.

10. Verfahren nach Anspruch 9, **dadurch gekennzeichnet, dass** Abschnitte der Kontur der Abrisslinie (3a, 3b; 13), die längs zur Bahnrichtung verlaufen, vollständig durchtrennt werden.

11. Verfahren nach einem der vorhergehenden Ansprüche, **dadurch gekennzeichnet, dass** das Bahnmaterial ein schlauchförmiges Bahnmaterial (1) ist.

12. Verfahren nach Anspruch 11, **dadurch gekennzeichnet, dass** das Bahnmaterial (1) von beiden einander gegenüberliegenden Außenflächen einer Laserstrahlbearbeitung unterzogen wird.

13. Verfahren nach Anspruch 11 oder 12, **dadurch gekennzeichnet, dass** die schlauchförmige Bahn (1) ein Verbund aus einem Gewebe (9) aus verstreckten Kunststoffbändchen und einer Folie (10) ist und der Laserstrahl (6) auf der Folienseite des Verbunds auftrifft und die Bahn abschnittsweise vollständig durchtrennt.

14. Verfahren nach Anspruch 13, **dadurch gekennzeichnet, dass** die beim abschnittsweisen Durchtrennen der Bahn verbleibenden Stege geschwächt werden.

15. Verfahren nach einem der Ansprüche 1 bis 10, **dadurch gekennzeichnet, dass** das Bahnmaterial ein flaches Bahnmaterial (11) ist.

16. Verfahren nach Anspruch 15, **dadurch gekennzeichnet, dass** das flache Bahnmaterial (11) ein Verbund aus einem Kunststoffbändchengewebe (9) und einer Folie (10) ist und der Laserstrahl (6) auf der Gewebeseite des Verbunds auftrifft und das Gewebe (9) größtenteils durchtrennt, die verbleibende Folie (10) jedoch nur an wenigen Stellen, vorzugsweise an den Stellen, die längs zur Bahnrichtung verlaufen, perforiert.

17. Verfahren zum Herstellen von Verpackungsbehältern, umfassend das Herstellen von Bahnabschnitten (2, 12) aus einem flexiblen Bahnmaterial (1, 11) nach einem der Ansprüche 1 bis 16, das Abreißen der Bahnabschnitte (2, 12) vom Bahnmaterial, das zumindest einmalige Umfalten zumindest eines Endbereichs des Bahnabschnitts auf den Bahnabschnittskörper und das Befestigen des umgefalteten Endbereichs am Bahnabschnittskörper durch Verkleben oder Verschweißen.

18. Verfahren zum Herstellen von Verpackungsbehältern nach Anspruch 17, **dadurch gekennzeichnet, dass** bei Verwendung eines flachen Bahnmaterials (11) die Bahnabschnitte (12) vor dem Abreißen der Länge nach zu einem Schlauch geformt werden, so dass sich die Längsränder überlappen und anschließend miteinander verbunden, insbesondere verklebt oder verschweißt werden.

19. Verfahren zum Herstellen von Verpackungsbehältern nach Anspruch 17 oder 18, **dadurch gekennzeichnet, dass**, vorzugsweise vor dem Abreißen der Bahnabschnitte vom Bahnmaterial, zumindest eine Längsfalte (8) in den Bahnabschnitten ausgebildet wird.

## Claims

1. A process for producing web sections (2, 12) from a flexible web material (1, 11), wherein the web material is provided with tear-off lines (3a, 3b; 13) at the distance of the length (L) of the web sections to be formed, which tear-off lines weaken the web material but do not bring about a complete separation of the web sections from the web material, and the web sections are separated from the web material along the tear-off lines by tearing, wherein the tear-off lines (3a, 3b; 13) are produced by laser beam processing, **characterized in that** the web material (1, 11) is a fabric made of small stretched plastic bands and that the laser beam (6) is guided through a scanner unit (5) along the predefined outline of the tear-off line (3a, 3b; 13) and, when the laser beam (6) is being guided along the predefined outline of the tear-off line, the laser energy of the laser beam (6) is altered according to the intended penetration depths into the web material (1, 11).

2. A process according to claim 1, **characterized in that** the laser beam (6) is guided along the predefined outline of the tear-off line (3a, 3b; 13) while the web material (1, 11) is being moved in the longitudinal direction (A), the laser beam being guided along in such a way that the longitudinal motion of the web material is counterbalanced, whereby the laser energy is optionally adjusted to the respective distance between the laser source and the point of impact on the web material.

3. A process according to claim 1 or 2, **characterized in that** the power of the laser source (4) is adjusted depending on the relative speed of the laser beam (6) with respect to the web material or that, for achieving a desired penetration depth, the relative speed of the laser beam (6) is adjusted with respect to the web material.

4. A process according to any of the preceding claims, **characterized in that** the fabric made of small stretched plastic bands is linked to at least one additional material layer.

5. A process according to claim 4, **characterized in that** the additional material layer is a plastic layer, in particular an OPP film, which is connected to the fabric.

6. A process according to claim 4, **characterized in that** the additional material layer is a coating of plastic material which is applied to the small plastic bands of the fabric.

7. A process according to any of claims 4 to 6, **characterized in that** the web material (1, 11) is a composite material made of a fabric of small plastic bands, which optionally is coated, and at least one further composite component selected from a plastic film, metal film, metallized plastic film, nonwoven fabric (nonwoven), specific adhesive layers and/or paper.

8. A process according to any of the preceding claims, **characterized in that** the tear-off lines (3a, 3b; 13) are designed as perforation lines (3a-1) or weakening lines (3a-2) or as a combination (3a-3) of perforation and weakening lines.

9. A process according to any of the preceding claims, **characterized in that** the tear-off line (3a, 3b; 13) is a stepped line.

10. A process according to claim 9, **characterized in that** sections of the outline of the tear-off line (3a, 3b; 13) which extend along the direction of the web are cut through completely.

11. A process according to any of the preceding claims, **characterized in that** the web material is a tubular web material (1).

12. A process according to claim 11, **characterized in that** the web material (1) of the two opposing outer surfaces is subjected to laser beam processing.

13. A process according to claim 11 or 12, **characterized in that** the tubular web (1) is a compound consisting of a fabric (9) of small stretched plastic bands and a film (10) and the laser beam (6) hits the film side of the compound and, in sections, cuts through the web completely.

14. A process according to claim 13, **characterized in that** the ribs reminaing when the web is cut through in sections are weakened.

15. A process according to any of claims 1 to 10, **characterized in that** the web material is a flat web material (11).

16. A process according to claim 15, **characterized in that** the flat web material (11) is a compound consisting of a fabric of small plastic bands (9) and a film (10) and the laser beam (6) hits the fabric side of the compound and cuts through most of the fabric (9) but perforates the remaining film (10) only in a small number of locations, preferably in locations extending along the direction of the web.

17. A process for producing packing containers, comprising the production of web sections (2, 12) from a flexible web material (1, 11) according to any of claims 1 to 16, tearing off the web sections (2, 12) from the web material, folding at least one end region of the web section over the web section body at least once and fastening the end region that has been folded over to the web section body by gluing or welding.

18. A process for producing packing containers according to claim 17, **characterized in that**, if a flat web material (11) is used, the web sections (12) are longitudinally formed into a tube before they are torn off so that the longitudinal edges will overlap and will subsequently be connected, in particular glued or welded, to each other.

19. A process for producing packing containers according to claim 17 or 18, **characterized in that** at least one longitudinal fold (8) is formed in the web sections, preferably before the web sections are torn off from the web material.

## Revendications

1. Procédé pour produire des tronçons de bande (2, 12) à partir d'un matériau flexible en bande (1, 11), dans lequel le matériau en bande est pourvu de lignes de déchirure (3a, 3b ; 13) à la distance de la longueur (L) des tronçons de bande à former, qui affaiblissent le matériau en bande, mais ne provoquent aucune séparation complète des tronçons de bande du matériau en bande, et les tronçons de bande sont séparés le long des lignes de déchirure par déchirure du matériau en bande, et les lignes de déchirure (3a, 3b ; 13) sont produites au moyen d'un traitement par rayon laser,
**caractérisé en ce que** le matériau en bande (1, 11) est un textile formé de bandelettes de matière plastique étirées, et **en ce que** le rayon laser (6) est guidé par une unité à scanneur (5) le long du contour prédéterminé de la ligne de déchirure (3a, 3b ; 13) et pendant le guidage du rayon laser (6) le long du contour prédéterminé de la ligne de déchirure, l'énergie du rayon laser (6) est modifiée selon la profondeur de pénétration prévue dans le matériau en bande (1, 11).

2. Procédé selon la revendication 1, **caractérisé en ce que** le rayon laser (6) est guidé le long du contour prédéterminé de la ligne de déchirure (3a, 3b ; 13) pendant que le matériau en bande (1, 11) est déplacé en direction longitudinale (A), et le rayon laser est réajusté de telle manière que le mouvement longitudinal du matériau en bande est compensé, et en option l'énergie laser est adaptée à la distance respective entre la source laser et le point d'impact sur le matériau en bande.

3. Procédé selon la revendication 1 ou 2, **caractérisé en ce que** la puissance de la source laser (4) est régulée en fonction de la vitesse relative du rayon laser (6) par référence au matériau en bande, ou **en ce que**, pour atteindre une profondeur de pénétration souhaitée, la vitesse relative du rayon laser (6) est régulée par rapport au matériau en bande.

4. Procédé selon l'une des revendications précédentes, **caractérisé en ce que** le textile formé de bandelettes de matière plastique étirées est relié avec au moins une couche de matière supplémentaire.

5. Procédé selon la revendication 4, **caractérisé en ce que** la couche de matière supplémentaire est une couche de matière plastique, en particulier une feuille OPP, qui est reliée au textile.

6. Procédé selon la revendication 4, **caractérisé en ce que** la couche de matière supplémentaire est un revêtement en matière plastique qui est appliqué sur les bandelettes en matière plastique du textile.

7. Procédé selon l'une des revendications 4 à 6, **caractérisé en ce que** le matériau en bande (1, 11) est un matériau composite formé d'un textile en bandelettes de matière plastique, en option avec un revêtement, et d'au moins un autre composant de composite, choisi parmi un film en matière plastique, un fil métallique, un film en matière plastique métallisée, une nappe non-tissée, des couches d'adhésion spéciales et/ou du papier.

8. Procédé selon l'une des revendications précédentes, **caractérisé en ce que** les lignes de déchirure (3a, 3b ; 13) sont réalisés sous forme de lignes de perforations (3a-1) ou de lignes d'affaiblissement (3a-2) ou d'une combinaison (3a-3) de lignes de perforations et de lignes d'affaiblissement.

9. Procédé selon l'une des revendications précédentes, **caractérisé en ce que** la ligne de déchirure (3a, 3b ; 13) est une ligne en gradins.

10. Procédé selon la revendication 9, **caractérisé en ce que** des tronçons du contour de la ligne de déchirure (3a, 3b ; 13), qui s'étendent longitudinalement par rapport à la direction de la bande, sont totalement séparés.

11. Procédé selon l'une des revendications précédentes, **caractérisé en ce que** le matériau en bande est un matériau en bande (1) sous forme de tuyau.

12. Procédé selon la revendication 11, **caractérisé en ce que** le matériau en bande (1) est soumis à un traitement par rayon laser depuis ses deux surfaces extérieures mutuellement opposées.

13. Procédé selon la revendication 11 ou 12, **caractérisé en ce que** la bande (1) sous forme de tuyau est un composite formé d'un textile (9) à partir de bandelettes de matière plastique étirées, et d'une feuille (10), et le rayon laser (6) tombe sur le composite du côté de la feuille et sépare entièrement la bande par tronçons.

14. Procédé selon la revendication 13, **caractérisé en ce que** les barrettes qui demeurent lors de la séparation de la bande par tronçons sont affaiblies.

15. Procédé selon l'une des revendications 1 à 10, **caractérisé en ce que** le matériau en bande et un matériau en bande plat (11).

16. Procédé selon la revendication 15, **caractérisé en ce que** le matériau en bande plat (11) et un composite d'un textile a bandelettes en matière plastique (9) et d'une feuille (10), et le rayon laser (6) tombe sur le composite du côté du textile, et sépare le textile (9) en majeure partie, mais ne perfore la feuille restante (10) qu'à un petit nombre d'emplacements, de préférence aux emplacements qui s'étendent le long de la direction de la bande.

17. Procédé pour produire des récipients d'emballage, comprenant la production de tronçons de bande (2, 12) en un matériau flexible en bande (1, 11) selon l'une des revendications 1 à 16, la déchirure des tronçons de bande (2, 12) du matériau en bande, le repliage au moins une fois d'au moins une zone terminale du tronçon de bande sur le corps du tronçon de bande, et la fixation de la zone terminale repliée sur le corps du tronçon de bande par collage ou par soudure.

18. Procédé pour la production de récipients d'emballage selon la revendication 17, **caractérisé en ce que** lors de l'utilisation d'un matériau en bande plat (11), les tronçons de bande (12) sont mis sous la forme d'un tuyau dans le sens de la longueur avant d'être déchirés, de sorte que les bordures longitudinales se chevauchent et sont ensuite reliées l'une à l'autre, en particuliers collées ou soudées.

19. Procédé pour produire des récipients d'emballage selon la revendication 17 ou 18, **caractérisé en ce que**, de préférence avant de déchirer les tronçons de bande du matériau en bande, on forme au moins un pli longitudinal (8) dans les tronçons de bande.
